# EUROPEAN PATENT SPECIFICATION

(11) **EP 1 361 253 B1**
(45) Date of publication and mention of the grant of the patent: **12.04.2006**
(21) Application number: 03252697.2
(22) Date of filing: 29.04.2003
(51) Int. Cl.: C08L 83/04

(54) **Addition curable silicone rubber compositions**
Additionsvernnetzbare Silikonkautschuk-Zusammensetzungen
Compositions de caoutchouc de silicone durcissables par polyaddition

(30) Priority: 01.05.2002 JP 2002129774
(43) Date of publication of application: 12.11.2003
(73) Proprietor: Shin-Etsu Chemical Co., Ltd., Chiyoda-ku Tokyo (JP)
(72) Inventor: Meguriya, Noriyuki, Shin-Etsu Chemical Co., Ltd, Gunma-ken (JP); Taira, Yujiro, Shin-Etsu Chemical Co., Ltd., Gunma-ken (JP)
(74) Representative: Stoner, Gerard Patrick

(56) References cited:
- EP-A- 0 552 919
- US-A- 3 220 972
- US-A- 3 677 981
- US-A- 4 340 647

## Description

### TECHNICAL FIELD

This invention relates to addition curable silicone rubber compositions which cure into products (silicone rubber) having a low hardness, typically a Durometer A hardness of 10 to 25. More particularly, it relates to addition curable silicone rubber compositions which cure into silicone rubber having a tack-free surface, a high modulus of resilience and bouncy rubber feel despite a low cured hardness, and are useful in the preparation of nursing bottle nipples and pacifiers.

### BACKGROUND

On account of heat resistance, freeze resistance, safety, aesthetic appearance (or transparency), comfortable touch and durability, silicone rubber is widely used in the preparation of infant toys, dishes and toothbrushes, and especially nursing bottle nipples and baby pacifiers. In particular, silicone rubber compositions of the addition reaction curing type are favored to use in these applications, especially from the safety standpoint, because they do not yield by-products, by contrast with silicone rubber compositions of the organic peroxide curing type in which decomposition of organic peroxides yields unwanted by-products. However, in order that silicone rubber be endowed with a sufficient strength to form nipples and pacifiers, reinforcing silica becomes a must with the outcome of increased hardness.

Nursing bottle nipples made of silicone rubber in the current widespread use generally have a Durometer A hardness of 30 to 50. Silicone rubber nipples with a lower hardness are desired in order to meet a need for diversified design and to be compliant with babies with a weak suck. Nevertheless, an attempt to reduce the amount of reinforcing silica in silicone rubber with the intention of forming nipples to a lower hardness results in nipples which lose strength and become unusable. In another attempt to achieve a lower hardness by shifting the balance of addition crosslinking rather than reducing the amount of reinforcing silica, the resulting silicone rubber becomes collapsible or tacky on the surface. Nipples and pacifiers of such rubber give an unacceptable feel.

An object of the present invention is to provide an addition curable silicone rubber composition which cures into a product or silicone rubber having a low hardness, high elongation, high tensile strength, and yet satisfactory rubber elasticity and tack-free rubber feel.

It has been found that a composition obtained by combining a normally liquid alkenyl group-bearing short-chain organopolysiloxane with a normally gum-like long-chain organopolysiloxane containing or not containing alkenyl groups cures into silicone rubber having a low hardness and rubber elasticity as well as a comfortable feel when used as nursing bottle nipples and pacifiers.

Therefore, the present invention provides an addition curable silicone rubber composition primarily comprising (A) 50 to 90 parts by weight of an organopolysiloxane containing at least two alkenyl groups each attached to a silicon atom in a molecule, having an average degree of polymerization of up to 1,500, and being liquid at room temperature, (B) 10 to 50 parts by weight of an organopolysiloxane having an average degree of polymerization of at least 2,000 and being gum-like at room temperature, the amount of components (A) and (B) combined being 100 parts by weight, (C) 0.2 to 20 parts by weight of an organohydrogenpolysiloxane having at least two hydrogen atoms each attached to a silicon atom in a molecule, (D) 10 to 40 parts by weight of fumed silica having a specific surface area of at least 150 m²/g as measured by the BET method, (E) 0 to 60 parts by weight of an organopolysiloxane free of addition reaction functionality and having an average degree of polymerization of up to 300, and (F) a catalytic amount of an addition reaction catalyst. Such a composition may cure into a product having a Durometer A hardness of 10 to 25.

The combination of specific amounts of components (A) to (F) according to the invention offers silicone rubber having a low hardness, a substantially tack-free surface and a comfortable rubber feel.

### FURTHER EXPLANATIONS; OPTIONS AND PREFERENCES

Component (A) in the silicone rubber composition of the invention is an organopolysiloxane containing at least two alkenyl groups each attached to a silicon atom in a molecule which is liquid at room temperature. Preferably it has the average compositional formula (I):

R¹ₐSiO_{(4-a)/2} (I)

wherein R¹, which may be the same or different, is a substituted or unsubstituted monovalent hydrocarbon group of 1 to 10 carbon atoms, preferably 1 to 8 carbon atoms, and "a" is a positive number of 1.5 to 2.8. preferably 1.8 to 2.5.

Examples of the substituted or unsubstituted monovalent hydrocarbon groups attached to silicon atoms, represented by R¹, include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl; and substituted ones of the foregoing groups in which some or all of the hydrogen atoms are replaced by halogen atoms (e.g., fluoro, bromo and chloro), cyano groups or the like, such as chloromethyl, chloropropyl, bromoethyl, trifluoropropyl and cyanoethyl. It is preferred that methyl account for at least 90% of the entire R¹.

At least two of the R¹ groups must be alkenyl groups, preferably of 2 to 8 carbon atoms, more preferably 2 to 6 carbon atoms, and most preferably vinyl.

The content of alkenyl groups is preferably from 1.0×10⁻⁶ mol/g to 5.0×10⁻⁴ mol/g, more preferably from 1.0×10⁻⁵ mol/g to 2.0×10⁻⁴ mol/g of the organopolysiloxane. Less than 1.0×10⁻⁶ mol/g of alkenyl may lead to too low a rubber hardness, that is, gel-like rubber. More than 5.0×10⁻⁴ mol/g of alkenyl may result in rubber having too high a crosslinking density and hence, a high hardness. The alkenyl groups may be attached to silicon atoms at ends of the molecular chain and/or silicon atoms midway the molecular chain.

With respect to the structure, the organopolysiloxane is generally a linear organopolysiloxane whose backbone is comprised of recurring diorganosiloxane units and which is blocked with a triorganosiloxy group at either end of the molecular chain. However, it may have a partially branched or cyclic structure. With respect to the molecular weight, the (weight) average degree of polymerization should be up to 1,500, typically from 100 to 1,500, preferably from 150 to 1,000. With an average degree of polymerization of less than 100, a satisfactory rubber feel may be lost. An organopolysiloxane with an average degree of polymerization of more than 1,500 has too high a viscosity to mold.

Component (B) is an organopolysiloxane having an average degree of polymerization of at least 2,000 which is gum-like at room temperature. Preferably it has the average compositional formula (II):

R²_{b}SiO_{(4-b)/2} (II)

wherein R², which may be the same or different, is a substituted or unsubstituted monovalent hydrocarbon group of 1 to 10 carbon atoms, preferably 1 to 8 carbon atoms, and b is a positive number of 1.8 to 2.5, preferably 1.9 to 2.1.

The substituted or unsubstituted monovalent hydrocarbon groups attached to silicon atoms, represented by R², are as described for R¹, and examples include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl; and substituted ones of the foregoing groups in which some or all of the hydrogen atoms are replaced by halogen atoms (e.g., fluoro, bromo and chloro), cyano groups or the like, such as chloromethyl, chloropropyl, bromoethyl, trifluoropropyl and cyanoethyl. It is preferred that methyl account for at least 90% of the entire R².

R² may include alkenyl groups, preferably of 2 to 8 carbon atoms, more preferably 2 to 6 carbon atoms, and most preferably vinyl although alkenyl groups need not be included. The content of alkenyl groups, when included, is preferably up to 0.0001 mol/g (0 to 1×10⁻⁴ mol/g), more preferably up to 0.00005 mol/g (from 5×10⁻⁸ mol/g to 5×10⁻⁵ mol/g) of the organopolysiloxane. More than 0.0001 mol/g of alkenyl may result in rubber having too high a hardness. The alkenyl groups may be attached to silicon atoms at ends of the molecular chain and/or silicon atoms midway the molecular chain.

With respect to the structure, like component (A), the organopolysiloxane (B) is generally a linear organopolysiloxane whose backbone is comprised of recurring diorganosiloxane units and which is blocked with a triorganosiloxy group at either end of the molecular chain. However, it may have a partially branched or cyclic structure. With respect to the molecular weight, the (weight) average degree of polymerization should be at least 2,000 (usually 2,000 to about 100,000), preferably at least 3,000 (usually 3,000 to about 80,000), subject to the organopolysiloxane being a gum as mentioned. With an average degree of polymerization of less than 2,000, there may result an unsatisfactory rubber feel and a tacky surface.

The amount of the gum-like organopolysiloxane (B) compounded ranges from 10 parts by weight relative to 90 parts by weight of the liquid organopolysiloxane (A) to 50 parts by weight relative to 50 parts by weight of (A) and preferably from 15 parts by weight relative to 85 parts by weight of (A) to 40 parts by weight relative to 60 parts by weight of (A), provided that the total amount of (A) and (B) combined is 100 parts by weight. At less than 10 parts of (B) to 90 parts of (A), a desired bouncy rubber feel is lost. At more than 50 parts of (B) to 50 parts of (A), the composition has too high a viscosity to mold.

Component (C) is an organohydrogenpolysiloxane having at least two, preferably at least three hydrogen atoms each attached to a silicon atom (i.e., SiH groups) in a molecule. The organohydrogenpolysiloxane serves as a curing agent for causing the composition to cure through crosslinking by way of hydrosilylating addition reaction between the SiH groups in its molecule and silicon atom-bonded alkenyl groups in components (A) and (B). A typical organohydrogenpolysiloxane has the following average compositional formula (III).

R³_{c}H_{d}SiO_{(4-c-d)/2} (III)

Herein, R³ is independently a substituted or unsubstituted monovalent hydrocarbon group of 1 to 10 carbon atoms, c is a positive number of 0.7 to 2.1, d is a positive number of 0.001 to 1.0, and the sum of c+d is 0.8 to 3.0. The organohydrogenpolysiloxane should have at least two, preferably at least three, more preferably 3 to 100, even more preferably 3 to 50 silicon atom-bonded hydrogen atoms (i.e., SiH groups) in a molecule.

The monovalent hydrocarbon group represented by R³ are the same as exemplified for R¹, but are preferably free of aliphatic unsaturation. Preferably, c is from 0.8 to 2.0, d is from 0.01 to 1.0, and c+d is from 1.0 to 2.5.

With respect to the molecular structure, the organohydrogenpolysiloxane may have a linear, cyclic or branched structure or a three-dimensional network structure. The preferred organohydrogenpolysiloxane has a degree of polymerization (or number of silicon atoms per molecule) in the range of 2 to about 300, especially from 4 to about 150 and is liquid at room temperature (25°C). It is noted that the silicon atom-bonded hydrogen atoms may be positioned at ends of the molecular chain and/or midway the molecular chain.

Exemplary organohydrogenpolysiloxanes include both end trimethylsiloxy-blocked methylhydrogenpolysiloxane, both end trimethylsiloxy-blocked dimethylsiloxane-methylhydrogensiloxane copolymers, both end dimethylhydrogensiloxy-blocked dimethylpolysiloxane, both end dimethylhydrogensiloxy-blocked dimethylsiloxane-methylhydrogensiloxane copolymers, both end trimethylsiloxy-blocked methylhydrogensiloxane-diphenylsiloxane copolymers, and both end trimethylsiloxy-blocked methylhydrogensiloxane-diphenylsiloxane-dimethylsiloxane copolymers, as well as copolymers comprising (CH₃)₂HSiO_{1/2} units and SiO_{4/2} units and copolymers comprising (CH₃)₂HSiO_{1/2} units. SiO_{4/2} units and (C₆H₅)₃SiO_{1/2} units.

An appropriate amount of the organohydrogenpolysiloxane (C) compounded is 0.2 to 20 parts by weight, preferably 0.3 to 10 parts by weight per 100 parts by weight of components (A) and (B) combined. Differently stated, the organohydrogenpolysiloxane is compounded in such amounts that the molar ratio of silicon atom-bonded hydrogen atoms (SiH groups) in the organohydrogenpolysiloxane to the total of silicon atom-bonded alkenyl groups in components (A) and (B), that is, SiH/alkenyl ratio may range from 0.8/1 to 10.0/1, especially from 1.0/1 to 5.0/1. A SiH/alkenyl ratio of less than 0.8 may induce short crosslinking, resulting in tacky rubber. At a SiH/alkenyl ratio of more than 10.0, the molded product may become foamed or difficult to remove from the mold.

Component (D) is fumed silica which is essential to impart sufficient strength to the silicone rubber. The fumed silica should have a specific surface area of at least 150 m²/g, usually 150 to 400 m²/g, preferably 150 to 350 m²/g, as measured by the BET method, with a surface area of less than 150 m²/g, the molded product is endowed with insufficient strength and becomes less transparent. Silica with a surface area of more than 400 m²/g interferes with compounding and causes discoloration. Fumed silica may be used as it is, but preferably after it is surface treated with a hydrophobizing agent. Alternatively, when fumed silica is kneaded with silicone oil, a surface treating agent is added so that the fumed silica is treated therewith during the kneading. Suitable surface treating agents include well-known agents, for example, alkylalkoxysilanes, alkylchlorosilanes, alkylsilazanes, silane coupling agents, titanate coupling agents, and fatty acid esters, which may be used alone or in admixture of two or more at the same time or at different timing.

Fumed silica is included in an amount of 10 to 40 parts by weight, preferably 15 to 35 parts by weight per 100 parts by weight of components (A) and (B) combined. Less than 10 parts of fumed silica fails to achieve a sufficient rubber strength whereas more than 40 parts of fumed silica leads to an increased hardness.

Component (E) is an organopolysiloxane free of addition reaction functionality and having an average degree of polymerization of up to 300. The addition reaction functionality denotes functional groups capable of participating in hydrosilylating addition reaction, including alkenyl groups such as vinyl and silicon atom-bonded hydrogen atoms (SiH groups). A typical organopolysiloxane is a linear, preferably non-functional, diorganopolysiloxane having the following average molecular formula. 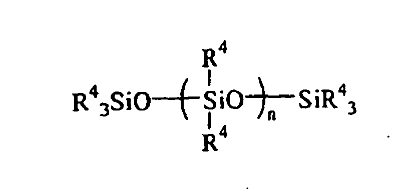 Herein, R⁴ is an unsubstituted or halo-substituted alkyl or aryl group having 1 to 10 carbon atoms, preferably 1 to 6 carbon atoms, such as for example, methyl, ethyl, propyl, butyl, hexyl, cyclohexyl, phenyl or 3,3,3-trifluoropropyl. Of these, methyl, phenyl and 3,3,3-trifluoropropyl are preferred, with methyl being most preferred. R⁴ may be the same or different. It is preferred that methyl account for at least 90 mol% of the entire R⁴. The letter n is an integer of up to 300 (i.e., 0 to 300), preferably 2 to 250.

It is acceptable that an organopolysiloxane of cyclic or branched structure is used as (E) instead of or in addition to the linear non-functional diorganopolysiloxane described just above. Notably, an organopolysiloxane having an average degree of polymerization (n in the above formula) in excess of 300 can cause the cured silicone rubber to be tacky on the surface even when used in minor amounts.

Component (E) is optional and is compounded in an amount of 0 to 60 parts by weight, preferably 1 to 50 parts by weight, more preferably 10 to 40 parts by weight per 100 parts by weight of components (A) and (B) combined. With more than 60 parts of component (E), the cured silicone rubber may have substantially degraded physical properties.

Component (F) is an addition reaction catalyst. Examples include platinum catalysts such as platinum black, platinic chloride, chloroplatinic acid, reaction products of chloroplatinic acid with monohydric alcohols, complexes of chloroplatinic acid with olefins, and platinum bisacetoacetate as well as palladium catalysts and rhodium catalysts. The addition reaction catalyst is used in a catalytic amount, and typically in such an amount as to give about 0.5 to 1,000 ppm, especially about 1 to 500 ppm of platinum group metal based on the weight of components (A) and (B) combined.

The above components are the essential constituents or primary components of the composition. If necessary, other additives are compounded in the composition. Exemplary additives include fillers such as precipitated silica, ground quartz, diatomaceous earth and calcium carbonate; electrically conductive agents such as carbon black, conductive zinc white and ground metals; hydrosilylation reaction regulating agents such as nitrogen compounds, acetylene compounds, phosphorus compounds, nitrile compounds, carboxylates, tin compounds, mercury compounds, and sulfur compounds; heat resistance improvers such as iron oxide and cerium oxide; internal mold release agents such as dimethylsilicone oil; tackifiers and thixotropic agents.

The silicone rubber composition of the invention can be prepared by mixing the above-described components. Preferably the composition is liquid at room temperature (25°C), and typically has a viscosity of 50 to 5,000 Pa·s, especially 100 to 3,000 Pa·s at 25°C.

Any customary method may be employed in molding and curing the silicone rubber composition. A liquid injection molding method is advantageously used. Curing may be effected by heat treatment at 120 to 230°C for about 3 seconds to 10 minutes, preferably at 150 to 210°C for about 5 seconds to 3 minutes.

The silicone rubber composition should be curable into a product or silicone rubber having a Durometer A hardness of 10 to 25, preferably 12 to 23. When measured according to JIS K6249, the silicone rubber should preferably exhibit any one or more and preferably all of a modulus of resilience of at least 40% (i.e., 40 to 100%), more preferably 45 to 95%, especially 50 to 80%, a tensile strength of at least 3.0 MPa, more preferably 3.5 to 10 MPa, especially 4 to 10 MPa, and an elongation at break of at least 400%, more preferably 450 to 1,200%, especially 500 to 1,000%. The silicone rubber is suitable for the preparation of nursing bottle nipples and baby pacifiers.

A method of preparation of such a composition by combining its ingredients is an aspect of the invention. Another aspect is the curing of such a composition to make a silicone rubber article or component, desirably having any one or more of the product parameters as specified herein. Nipples, teats and pacifiers (dummies) are preferred articles. The silicone rubber articles/components are in themselves aspects of the invention.

### EXAMPLE

Examples of the invention are given below by way of illustration. All parts are by weight, and the average degree of polymerization is a weight average degree of polymerization.

### Example 1

To 70 parts of a dimethylpolysiloxane (1) blocked with a dimethylvinylsiloxy group at either end and having an average degree of polymerization of 750 were added 25 parts of fumed silica having a specific surface area of 300 m²/g (Aerosil 300 by Nippon Aerosil Co., Ltd.), 5 parts of hexamethyldisilazane, and 1.0 part of water. The ingredients were mixed for 30 minutes at room temperature, heated at 150°C, agitated for a further 3 hours, and cooled, yielding a silicone rubber base. To 95 parts of the silicone rubber base were added 10 parts of the dimethylpolysiloxane (1) and 20 parts of a gum-like dimethylpolysiloxane (2) blocked with a dimethylvinylsiloxy group at either end and having an average degree of polymerization of 8,000 (vinyl content 1×10⁻⁶ mol/g). Agitation was continued for 30 minutes. To this mixture were further added 20 parts of a dimethylpolysiloxane blocked with a trimethylsiloxy group at either end and having an average degree of polymerization of 50, 5.6 parts of a methylhydrogenpolysiloxane (3) having SiH groups at opposite ends and side chains (degree of polymerization 17, SiH content 0.0050 mol/g) as a crosslinking agent [giving a molar ratio of SiH groups in methylhydrogenpolysiloxane (3) to alkenyl groups in dimethylpolysiloxane (1) and gum-like dimethylpolysiloxane (2) = 1.6 (mol/mol)], and 0.05 part of ethynyl cyclohexanol as a reaction regulating agent. The ingredients were agitated for 15 minutes, yielding a silicone rubber composition which had a viscosity of 200 Pa·s at 25°C as measured by a Brookfield Type S viscometer with No. 7 rotor at 10 rpm.

The silicone rubber composition, 100 parts, was mixed with 0.1 part of a platinum catalyst (Pt concentration 1%), press cured at 120°C for 10 minutes and post-cured in an oven at 150°C for one hour. The cured rubber was measured for hardness, tensile strength, elongation at break and modulus of resilience in accordance with JIS K6249. The rubber surface was examined by finger touch. The results are shown in Table 1.

### Example 2

To 60 parts of a dimethylpolysiloxane (4) blocked with a dimethylvinylsiloxy group at either end and having an average degree of polymerization of 500 were added 20 parts of surface-hydrophobized, fumed silica having a specific surface area of 170 m²/g (Aerosil R-974 by Nippon Aerosil Co., Ltd.), 3 parts of hexamethyldisilazane, and 1.0 part of water. The ingredients were mixed for 30 minutes at room temperature, heated at 150°C, agitated for a further 3 hours, and cooled, yielding a silicone rubber base. To 80 parts of the silicone rubber base were added 10 parts of dimethylpolysiloxane (4) and 40 parts of a gum-like dimethylpolysiloxane free of alkenyl groups and having an average degree of polymerization of 5,000. Agitation was continued for 30 minutes. To this mixture were further added 10 parts of a dimethylpolysiloxane blocked with a trimethylsiloxy group at either end and having an average degree of polymerization of 150, 1.8 parts of methylhydrogenpolysiloxane (3) (degree of polymerization 17, SiH content 0.0050 mol/g) as a crosslinking agent [giving a molar ratio of SiH groups in methylhydrogenpolysiloxane (3) to alkenyl groups in dimethylpolysiloxane (4) = 2.5 (mol/mol)], and 0.05 part of ethynyl cyclohexanol as a reaction regulating agent. The ingredients were agitated for 15 minutes, yielding a silicone rubber composition which had a viscosity of 800 Pa·s at 25°C as measured by a Brookfield Type S viscometer with No. 7 rotor at 10 rpm.

The silicone rubber composition, 100 parts, was mixed with 0.1 part of a platinum catalyst (Pt concentration 1%), press cured at 120°C for 10 minutes and post-cured in an oven at 150° C for one hour. The cured rubber was measured for hardness, tensile strength, elongation at break and modulus of resilience in accordance with JIS K6249. The rubber surface was examined by finger touch. The results are shown in Table 1.

### Example 3

To 60 parts of dimethylpolysiloxane (4) blocked with a dimethylvinylsiloxy group at either end and having an average degree of polymerization of 500, used in Example 2, were added 25 parts of fumed silica having a specific surface area of 300 m²/g (Aerosil 300 by Nippon Aerosil Co., Ltd.), 5 parts of hexamethyldisilazane, and 1.0 part of water. The ingredients were mixed for 30 minutes at room temperature, heated at 150°C, agitated for a further 3 hours, and cooled, yielding a silicone rubber base. To 85 parts of the silicone rubber base were added 10 parts of dimethylpolysiloxane (4) and 40 parts of a gum-like dimethylpolysiloxane (5) having an average degree of polymerization of 5,000 (vinyl content 2.0×10⁻⁵ mol/g). Agitation was continued for 30 minutes. To this mixture were further added 2.6 parts of a methylhydrogenpolysiloxane (6) having SiH groups only at ends (degree of polymerization 15, SiH content 0.0018 mol/g) and 0.6 part of methylhydrogenpolysiloxane (3) (degree of polymerization 17, SiH content 0.0050 mol/g), used in Example 1, as crosslinking agents [giving a molar ratio of SiH groups in both methylhydrogenpolysiloxanes (3) and (6) to alkenyl groups in both dimethylpolysiloxane (4) and gum-like dimethylpolysiloxane (5) = 2.0 (mol/mol)], and 0.05 part of ethynyl cyclohexanol as a reaction regulating agent. The ingredients were agitated for 15 minutes, yielding a silicone rubber composition which had a viscosity of 3,000 Pa·s at 25°C as measured by a Brookfield Type S viscometer with No. 7 rotor at 2 rpm.

The silicone rubber composition, 100 parts, was mixed with 0.1 part of a platinum catalyst (Pt concentration 1%), press cured at 120°C for 10 minutes and post cured in an oven at 150°C for one hour. The cured rubber was measured for hardness, tensile strength, elongation at break and modulus of resilience in accordance with JIS K6249. The rubber surface was examined by finger touch. The results are shown in Table 1.

### Comparative Example 1

To 70 parts of dimethylpolysiloxane (1) blocked with a dimethylvinylsiloxy group at either end and having an average degree of polymerization of 750 were added 25 parts of fumed silica having a specific surface area of 300 m²/g (Aerosil 300 by Nippon Aerosil Co., Ltd.), 5 parts of hexamethyldisilazane, and 1.0 part of water. The ingredients were mixed for 30 minutes at room temperature, heated at 150°C, agitated for a further 3 hours, and cooled, yielding a silicone rubber base. To 95 parts of the silicone rubber base was added 30 parts of dimethylpolysiloxane (1). Agitation was continued for 30 minutes. To this mixture were further added 20 parts of dimethylpolysiloxane blocked with a trimethylsiloxy group at either end and having an average degree of polymerization of 50, 1.2 parts of methylhydrogenpolysiloxane (3) having SiH groups at opposite ends and side chains (degree of polymerization 17, SiH content 0.0050 mol/g) as a crosslinking agent [giving a molar ratio of SiH groups in methylhydrogenpolysiloxane (3) to alkenyl groups in dimethylpolysiloxane (1) = 1.6 (mol/mol)], and 0.05 part of ethynyl cyclohexanol as a reaction regulating agent. The ingredients were agitated for 15 minutes, yielding a silicone rubber composition which had a viscosity of 80 Pa·s at 25°C as measured by a Brookfield Type S viscometer with No. 7 rotor at 10 rpm.

The silicone rubber composition, 100 parts, was mixed with 0.1 part of a platinum catalyst (Pt concentration 1%), press cured at 120°C for 10 minutes and post cured in an oven at 150°C for one hour. The cured rubber was measured for hardness, tensile strength, elongation at break and modulus of resilience in accordance with JIS K6249. The rubber surface was examined by finger touch. The results are shown in Table 1.

### Comparative Example 2

To 70 parts of dimethylpolysiloxane (1) blocked with a dimethylvinylsiloxy group at either end and having an average degree of polymerization of 750 were added 25 parts of fumed silica having a specific surface area of 300 m²/g (Aerosil 300 by Nippon Aerosil Co., Ltd.), 5 parts of hexamethyldisilazane, and 1.0 part of water. The ingredients were mixed for 30 minutes at room temperature, heated at 150°C, agitated for a further 3 hours, and cooled, yielding a silicone rubber base. To 95 parts of the silicone rubber base was added 30 parts of dimethylpolysiloxane (1). Agitation was continued for 30 minutes. To this mixture were further added 20 parts of dimethylpolysiloxane blocked with a trimethylsiloxy group at either end and having an average degree of polymerization of 50, 0.5 part of methylhydrogenpolysiloxane (3) having SiH groups at opposite ends and side chains (degree of polymerization 17. SiH content 0.0050 mol/g) as a crosslinking agent [giving a molar ratio of SiH groups in methylhydrogenpolysiloxane (3) to alkenyl groups in dimethylpolysiloxane (1) = 0.7 (mol/mol)], and 0.05 part of ethynyl cyclohexanol as a reaction regulating agent. The ingredients were agitated for 15 minutes, yielding a silicone rubber composition which had a viscosity of 85 Pa·s at 25°C as measured by a Brookfield Type S viscometer with No. 7 rotor at 10 rpm.

The silicone rubber composition, 100 parts, was mixed with 0.1 part of a platinum catalyst (Pt concentration 1%), press cured at 120°C for 10 minutes and post cured in an oven at 150°C for one hour. The cured rubber was measured for hardness, tensile strength, elongation at break and modulus of resilience in accordance with JIS K6249. The rubber surface was examined by finger touch. The results are shown in Table 1.

### Comparative Example 3

To 70 parts of dimethylpolysiloxane (4) blocked with a dimethylvinylsiloxy group at either end and having an average degree of polymerization of 500 were added 10 parts of fumed silica having a specific surface area of 300 m²/g (Aerosil 300 by Nippon Aerosil Co., Ltd.), 3 parts of hexamethyldisilazane, and 1.0 part of water. The ingredients were mixed for 30 minutes at room temperature, heated at 150°C, agitated for a further 3 hours, and cooled, yielding a silicone rubber base. To 95 parts of the silicone rubber base was added 30 parts of dimethylpolysiloxane (4). Agitation was continued for 30 minutes. To this mixture were further added 1.9 parts of methylhydrogenpolysiloxane (3) having SiH groups at opposite ends and side chains (degree of polymerization 17, SiH content 0.0050 mol/g) as a crosslinking agent [giving a molar ratio of SiH groups in methylhydrogenpolysiloxane (3) to alkenyl groups in dimethylpolysiloxane (4) = 1.8 (mol/mol)], and 0.05 part of ethynyl cyclohexanol as a reaction regulating agent. The ingredients were agitated for 15 minutes, yielding a silicone rubber composition which had a viscosity of 40 Pa·s at 25°C as measured by a Brookfield Type S viscometer with No. 7 rotor at 10 rpm.

The silicone rubber composition, 100 parts, was mixed with 0.1 part of a platinum catalyst (Pt concentration 1%), press cured at 120°C for 10 minutes and post cured in an oven at 150°C for one hour. The cured rubber was measured for hardness, tensile strength, elongation at break and modulus of resilience in accordance with JIS K6249. The rubber surface was examined by finger touch. The results are shown in Table 1.

**Table 1**

| | Example | | | Comparative Example | | |
|---|---|---|---|---|---|---|
| | 1 | 2 | 3 | 1 | 2 | 3 |
| Durometer A hardness | 15 | 12 | 20 | 28 | 16 | 14 |
| Tensile strength (MPa) | 4.5 | 4.0 | 6.1 | 5.9 | 4.1 | 2.3 |
| Elongation at break (%) | 660 | 510 | 600 | 550 | 490 | 220 |
| Modulus of resilience (%) | 62 | 53 | 66 | 59 | 34 | 60 |
| Surface feel to finger touch Surface feel to finger touch | tack-free | tack-free | tack-free | tack-free | tacky | tack-free |

The silicone rubber compositions embodying the invention gave silicone rubber parts having a low hardness, high elongation, high tensile strength and high modulus of resilience as well as a tack-free surface and bouncy rubber feel. They are best suited in the molding of nursing bottle nipples and baby pacifiers.

## Claims

1. An addition curable silicone rubber composition comprising
(A) 50 to 90 parts by weight of organopolysiloxane containing at least two alkenyl groups each attached to a silicon atom per molecule, having an average degree of polymerization of up to 1,500, and being liquid at room temperature,
(B) 10 to 50 parts by weight of organopolysiloxane having an average degree of polymerization of at least 2,000 and being gum-like at room temperature, the amount of components (A) and (B) combined being 100 parts by weight,
(C) 0.2 to 20 parts by weight of organohydrogenpolysiloxane having at least two hydrogen atoms each attached to a silicon atom in a molecule,
(D) 10 to 40 parts by weight of fumed silica having a specific surface area of at least 150 m²/g as measured by the BET method,
(E) 0 to 60 parts by weight of organopolysiloxane free of addition reaction functionality and having an average degree of polymerization of up to 300, and
(F) a catalytic amount of an addition reaction catalyst,
the composition being curable to a product having a Durometer A hardness of 10 to 25.

2. The silicone rubber composition of claim 1 wherein the cured product has a modulus of resilience of at least 40%.

3. The silicone rubber composition of claim 1 or 2 which has a viscosity of 50 to 5,000 Pa·s at room temperature and is suitable for liquid injection molding.

4. The silicone rubber composition of claim 1, 2 or 3 wherein the cured product has a tensile strength of at least 3.0 MPa and an elongation at break of at least 400%.

5. The silicone rubber composition of any one of claims 1 to 4 wherein the gum-like organopolysiloxane (B) has a vinyl content of up to 0.0001 mol/g.

6. The silicone rubber composition of any one of the preceding claims in which the organopolysiloxane (A) is of the average compositional formula (I):
R¹ₐSiO_{(4-a)/2} (I)
in which R¹ are substituted or unsubstituted monovalent hydrocarbon groups of 1 to 10 carbon atoms, at least 90% of R¹ being methyl groups, and at least two of the R¹ groups being vinyl groups, and 'a' is from 1.8 to 2.5.

7. The silicone rubber composition of any one of the preceding claims in which the organopolysiloxane (A) has a weight average degree of polymerisation from 150 to 1,000.

8. The silicone rubber composition of any one of the preceding claims in which the organopolysiloxane (B) is of the average compositional formula (II):
R²_{b}SiO_{(4-b)/2} (II)
in which R² are substituted or unsubstituted monovalent hydrocarbon groups of 1 to 10 carbon atoms, at least 90% of R² being methyl groups, and 'b' is from 1.9 to 2.1.

9. The silicone rubber composition of any one of the preceding claims in which the organopolysiloxane (B) has a weight average degree of polymerisation from 3,000 to 80,000.

10. A method of preparing a silicone rubber composition, comprising combining components (A) to (F) as specified in any one of claims 1 to 9.

11. A method of making a silicone rubber product comprising curing a silicone rubber composition as specified in any one of claims 1 to 9.

12. A method according to claim 11 in which the product is a nipple or pacifier.

13. A silicone rubber product which is a cured composition according to any one of claims 1 to 9.

14. A silicone rubber product according to claim 13 which is a nipple or pacifier.

## Patentansprüche

1. Additionshärtbare Siliconkautschukzusammensetzung, umfassend
(A) 50 bis 90 Gewichtsteile Organopolysiloxan mit zumindest zwei jeweils an ein Siliciumatom gebundenen Alkenylgruppen pro Molekül und einem mittleren Polymerisationsgrad von bis zu 1.500, das bei Raumtemperatur flüssig ist,
(B) 10 bis 50 Gewichtsteile Organopolysiloxan mit einem mittleren Polymerisationsgrad von zumindest 2.000, das bei Raumtemperatur gummiartig ist, wobei die Komponente (A) und (B) zusammen 100 Gewichtsteile ergeben,
(C) 0,2 bis 20 Gewichtsteile Organohydrogenpolysiloxan mit zumindest zwei jeweils an ein Siliciumatom gebundenen Wasserstoffatomen pro Molekül,
(D) 10 bis 40 Gewichtsteile pyrogene Kieselsäure mit einer spezifischen Oberfläche von zumindest 150 m²/g, gemessen nach dem BET-Verfahren,
(E) 0 bis 60 Gewichtsteile Organopolysiloxan, das frei von Additionsreaktionsfunktionalität ist und einen mittleren Polymerisationsgrad von bis zu 300 aufweist,
(F) eine katalytische Menge eines Additionsreaktionskatalysators,
wobei die Zusammensetzung zu einem Produkt mit einer Durometer-A-Härte von 10 bis 25 härtbar ist.

2. Siliconkautschukzusammensetzung nach Anspruch 1, worin das gehärtete Produkt einen Elastizitätsmodul von zumindest 40 % aufweist.

3. Siliconkautschukzusammensetzung nach Anspruch 1 oder 2, die eine Viskosität von 50 bis 5.000 Pa·s bei Raumtemperatur aufweist und für ein Flüssigspritzgussverfahren geeignet ist.

4. Siliconkautschukzusammensetzung nach Anspruch 1 , 2 oder 3, worin das gehärtete Produkt eine Zugfestigkeit von zumindest 3,0 MPa und eine Bruchdehnung von zumindest 400 % aufweist.

5. Siliconkautschukzusammensetzung nach einem der Ansprüche 1 bis 4, worin das gummiartige Organopolysiloxan (B) einen Vinylgehalt von bis zu 0,0001 mol/g aufweist.

6. Siliconkautschukzusammensetzung nach einem der vorangegangenen Ansprüche, worin das Organopolysiloxan (A) die mittlere Zusammensetzungsformel (I) aufweist:
R¹ₐSiO_{(4-a)/2} (I)
worin die R¹ substituierte oder unsubstituierte einwertige Kohlenwasserstoffgruppen mit 1 bis 10 Kohlenstoffatomen sind, wobei zumindest 90 % der R¹ Methylgruppen sind und zumindest zwei der R¹-Gruppen Vinylgruppen sind, und 'a' 1,8 bis 2,5 ist.

7. Siliconkautschukzusammensetzung nach einem der vorangegangenen Ansprüche, worin das Organopolysiloxan (A) einen gewichtsmittleren Polymerisationsgrad von 150 bis 1.000 aufweist.

8. Siliconkautschukzusammensetzung nach einem der vorangegangenen Ansprüche, worin das Organopolysiloxan (B) die mittlere Zusammensetzungsformel (II) aufweist:
R²_{b}SiO_{(4-b)/2} (II)
worin die R² substituierte oder unsubstituierte einwertige Kohlenwasserstoffgruppen mit 1 bis 10 Kohlenstoffatomen sind, wobei zumindest 90 % der R² Methylgruppen sind, und 'b' 1,9 bis 2,1 ist.

9. Siliconkautschukzusammensetzung nach einem der vorangegangenen Ansprüche, worin das Organopolysiloxan (B) einen gewichtsmittleren Polymerisationsgrad von 3.000 bis 80.000 aufweist.

10. Verfahren zur Herstellung einer Siliconkautschukzusammensetzung, umfassend das Kombinieren von Komponenten (A) bis (F), wie sie einem der Ansprüche 1 bis 9 definiert sind.

11. Verfahren zur Herstellung einer Siliconkautschukzusammensetzung, umfassend das Härten einer Siliconkautschukzusammensetzung, wie sie in einem der Ansprüche 1 bis 9 definiert ist.

12. Verfahren nach Anspruch 11, worin das Produkt ein Sauger oder Schnuller ist.

13. Siliconkautschukprodukt, bei dem es sich um eine gehärtete Zusammensetzung nach einem der Ansprüche 1 bis 9 handelt.

14. Siliconkautschukprodukt nach Anspruch 13, das ein Sauger oder Schnuller ist.

## Revendications

1. Composition de caoutchouc de silicone durcissable par addition comprenant
(A) 50 à 90 parties en poids d'organopolysiloxane contenant au moins deux groupes alcényles chacun attaché à un atome de silicium par molécule, ayant un degré moyen de polymérisation pouvant atteindre 1500, et étant liquide à température ambiante,
(B) 10 à 50 parties en poids d'organopolysiloxane ayant un degré moyen de polymérisation d'au moins 2000 et ressemblant à une gomme à température ambiante, la quantité des composants (A) et (B) combinée étant de 100 parties en poids,
(C) 0,2 à 20 parties en poids d'organohydrogénopolysiloxane ayant au moins deux atomes d'hydrogène, chacun attaché à un atome de silicium dans un molécule,
(D) de 10 à 40 parties en poids de silice fumée ayant une aire superficielle spécifique d'au moins 150 m²/g en mesurant par la méthode BET,
(E) 0 à 60 parties en poids d'organopolysiloxane sans fonctionnalité de réaction d'addition et ayant un degré moyen de polymérisation pouvant atteindre 300, et
(F) une quantité catalytique d'un catalyseur de réaction d'addition,
la composition étant durcissable en un produit ayant une dureté Duromètre A de 10 à 25.

2. Composition de caoutchouc de silicone de la revendication 1 où le produit durci a un module de résilience d'au moins 40%.

3. Composition de caoutchouc de silicone de la revendication 1 ou 2 qui a une viscosité de 50 à 5000 Pa.s à température ambiante et est approprié pour un moulage par injection liquide.

4. Composition de caoutchouc de silicone de la revendication 1, 2 ou 3 où la produit durci a une résistance à la traction d'au moins 3,0 MPa et un allongement à la rupture d'au moins 400%.

5. Composition de caoutchouc de silicone de l'une quelconque des revendications 1 à 4 où l'organopolysiloxane (B) ressemblant à une gomme a une teneur en vinyle jusqu'à 0,0001 mole/g.

6. Composition de caoutchouc de silicone de l'une quelconque des revendications précédentes dans laquelle l'organopolysiloxane (A) est de la formule de composition moyenne (I):
R¹ₐSiO_{(4-a)/2} (I)
dans laquelle R¹ sont des groupes hydrocarbures monovalents substitués ou non substitués de 1 à 10 atomes de carbone, au moins 90% de R¹ étant des groupes méthyles, et au moins deux des groupes R¹ étant des groupes vinyles, et "a" est de 1,8 à 2,5.

7. Composition de caoutchouc de silicone de l'une quelconque des revendications précédentes dans laquelle l'organopolysiloxane (A) a un degré moyen en poids de polymérisation de 150 à 1000.

8. Composition de caoutchouc de silicone de l'une quelconque des revendications précédentes dans laquelle l'organopolysiloxane (B) est de la formule de composition moyenne (II) qui suit:
R²_{b}SiO_{(4-b)/2} (II)
dans laquelle R² sont des groupes hydrocarbures monovalents substitués ou nonsubstitués de 1 à 10 atomes de carbone, au moins 90% de R² étant des groupes méthyles, et "b" est de 1,9 à 2,1.

9. Composition du caoutchouc de silicone de l'une quelconque des revendications précédentes dans laquelle l'organopolysiloxane (B) a un degré moyen en poids de polymérisation de 3000 à 80 000.

10. Méthode de préparation d'une composition de caoutchouc de silicone consistant à combiner les composants (A) à (F) comme spécifié dans l'une quelconque des revendications 1 à 9.

11. Méthode de production d'un produit de caoutchouc de silicone comprenant le durcissement d'une composition de caoutchouc de silicone telle que spécifiée dans l'une quelconque des revendications 1 à 9.

12. Méthode selon la revendication 11 dans laquelle le produit est une tétine ou une sucette.

13. Produit de caoutchouc de silicone qui est une composition durcie selon l'une quelconque des revendications 1 à 9.

14. Produit de caoutchouc de silicone selon la revendication 13, qui est une tétine de biberon ou une tétine calmante.
